# EUROPÄISCHE PATENTANMELDUNG

(11) **EP 1 777 911 A1**
(43) Veröffentlichungstag der Anmeldung: **25.04.2007**
(21) Anmeldenummer: 06020952.5
(22) Anmeldetag: 05.10.2006
(51) Int. Cl.: H04L 29/06

(54) **System und Speichermedium zur Bereitstellung einer sicheren Kommunikation von einem in einem gesicherten Netzwerk nicht eingebundenen Client-Computer**

(30) Priorität: 20.10.2005 DE 202005016487 U
(71) Anmelder: Saynet Solutions GmbH, 85221 Dachau (DE)
(72) Erfinder: Saygin, Yakup, 85221 Dachau (DE)
(74) Vertreter: Grünecker, Kinkeldey, Stockmair & Schwanhäusser Anwaltssozietät

(57) **Zusammenfassung**

Die Erfindung betrifft ein System zum Bereitstellen einer Kommunikation für einen in einem gesicherten Netzwerk nicht eingebundenen Client-Computer mit Ressourcen innerhalb des gesicherten Netzwerks mit einem Client-Computer mit mindestens einem Signaleingang, einem transportablen, computerlesbaren Speichermedium, beinhaltend Authentifizierungsdaten, ein Verbindungsprogramm und Einrichtungen, die dafür konfiguriert sind, das computerlesbare Speichermedium mit dem Client-Computer über den Signaleingang zu verbinden und einem Host-Computer, der mit dem gesicherten Netzwerk über eine gesicherte Verbindung verbunden ist, dadurch gekennzeichnet, dass der Client-Computer, wenn das computerlesbare Speichermedium mit dem Client-Computer über den Signaleingang verbunden ist, das Speichermedium als Datenspeicher erkennt, wodurch das Verbindungsprogramm auf dem Client-Computer ausführbar wird und das Verbindungsprogramm so konfiguriert ist, dass es bei Ausführung sicherstellt, dass der Client-Computer unter Verwendung der Authentifizierungsdaten eine sichere Verbindung zu dem Host-Computer herstellt, so dass der Host-Computer eine oder mehrere Anfragen des Client-Computers, die an Ressourcen innerhalb des gesicherten Netzwerks gerichtet sind, an das gesicherte Netzwerk weiterleitet.

## Beschreibung

Die vorliegende Erfindung bezieht sich auf ein System für die sichere Kommunikation eines in einem gesicherten Netzwerk nicht registrierten Client-Computers mit Ressourcen innerhalb des gesicherten Netzwerkes.

Die Kommunikation über das Intemet ist inzwischen zu einem festen Bestandteil der täglichen Korrespondenz und Geschäftsabwicktung geworden. Eine besondere Herausforderung ist es jedoch, beim Austausch vertraulicher Daten über das Internet die Sicherheit der Kommunikationsverbindung zu gewährleisten. Die Absicherung der Kommunikationsverbindung dient dem Schutz der übertragenen Daten vor unbefugtem Zugriff.

Innerhalb eines nach außen abgesicherten Firmennetzes ist die Sicherheit einer Kommunikationsverbindung gewährleistet. Eine unbefugte Person muss sich hier, um Zugriff auf die Kommunikationsverbindung zu haben, innerhalb des Firmennetzes aufhalten, d.h. Zugriff auf einen in dem Firmennetzwerk registrierten Computer haben. In der Regel besteht zusätzlich die Notwendigkeit, das Firmennetzwerk oder Intranet mit dem Internet zu verbinden, um Benutzem des Intranets Zugriff auf Daten im WWW zu ermöglichen. Umgekehrt besteht die Anforderung, dass ein Nutzer, beispielsweise ein Mitarbeiter, Zugriff auf Daten erhält, die sich innerhalb des Intranets befinden, während der Nutzer selbst sich außerhalb des Intranets befindet. Benötigt ein Mitarbeiter, z.B. im Fall einer Dienstreise, Zugriff auf vertrauliche Firmendaten, ist es notwendig eine hochsichere Verbindung zwischen dem Firmennetzwerk und dem lokalen Computer des Mitarbeiters herzustellen.

Ein gesichertes Netzwerk, z.B. ein Virtual Private Network (VPN) ist ein Computemetzwerk, das zum Transport vertraulicher Daten ein öffentliches Netz benutzt. Die Teilnehmer eines VPN können Daten, wie in einem intemen Local Area Network (LAN) austauschen. Eine Verschlüsselung sichert die Daten, die über das öffentliche Netz übertragen werden. Eine Verbindung der Netze wird über einen sog. Tunnel zwischen dem VPN-Client und dem VPN-Server ermöglicht. Ein VPN kann verwendet werden, um Mitarbeitem von außerhalb des Firmennetzes Zugriff auf das interne Netz zu geben. Dabei baut der Computer des Mitarbeiters eine VPN-Verbindung zu dem ihm bekannten VPN-Gateway der Firma auf. Mittels dieser Verbindung ist es dem Mitarbeiter nun möglich, so zu arbeiten, als ob er im lokalen Netz der Firma wäre. Durch Verwendung von Passwörtern, öffentlichen Authentifizierungsdaten Und/oder Zertifikaten wird die sichere Übertragung der Daten gewährleistet. Mit steigender Zahl der Benutzer, die von außen auf das Firmennetz zugreifen wollen, steigt jedoch der Verwaltungsaufwand für die benötigten Zertifikate. Die Installation der Zertifikate auf dem jeweiligen Zugangsrechner ist aufwendig und kann auch ein Sicherheitsrisiko darstellen, da das abgespeicherte Zertifikat unter Umständen von einer unbefugten Person ausgelesen und benutzt werden kann.

Es ist daher die Aufgabe der vorliegenden Efindung, ein verbessertes System für die Kommunikation von Computern mit Ressourcen innerhalb eines gesicherten Netzwerkes zur Verfügung zu stellen.

Diese Aufgabe wird gelöst durch ein System zum Bereitstellen einer Kommunikation für einen in einem gesicherten Netzwerk nicht eingebundenen Client-Computer mit Ressourcen innerhalb des gesicherten Netzwerkes mit einem Client-Computer mit mindestens einem Signaleingang, einem transportablen, computerlesbaren Speichermedium beinhaltend Authentifizierungsdaten, ein Verbindungsprogramm und Einrichtungen, die dafür konfiguriert sind, dass computerlesbare Speichermedium mit dem Client-Computer über den Signaleingang zu verbinden und einem Host-Computer, der mit dem gesicherten Netzwerk über eine gesicherte Verbindung verbunden ist, dadurch gekennzeichnet, dass der Client-Computer, wenn das Speichermedium mit dem Client-Computer über den Signaleingang verbunden ist, das Speichermedium als Datenspeicher erkennt, wodurch das Verbindungsprogramm ausführbar wird und das Verbindungsprogramm, so konfiguriert ist, dass es bei Ausführung sicherstellt, dass der Client-Computer unter Verwendung der Authentifizierungsdaten eine sichere Verbindung zu dem Host-Computer herstellt, so dass der Host-Computer eine oder mehrere Anfragen des Client-Computers, die an Ressourcen innerhalb des gesicherten Netzwerks gerichtet sind, an das gesicherte Netzwerk weiterleitet.

Des Weiteren wird die Aufgabe gelöst durch ein transportables, computerlesbares Speichermedium, das automatisch als Datenspeicher von einem Computer erkannt wird, wenn es mit dem Computer über einen Signaleingang verbunden wird, wobei das Speichermedium sowohl Authentifizierungsdaten als auch ein Verbindungsprogramm aufweist, welches auf einem Computer ausgeführt wird, veranlasst: Aufbau einer sicheren Verbindung unter Verwendung der Authentifizierungsdaten zu einem Host-Computer, der mit einem gesicherten Netzwerk über eine gesicherte Verbindung verbunden ist, Senden einer Anfrage von dem Computer an den Host-Computer und Weiterleitung der Anfrage des Computers durch den Host-Computer an das gesicherte Netzwerk.

Bevorzugte Ausgestaltungen der vorliegenden Erfindung werden im Weiteren mit Bezug auf folgende Zeichnungsfiguren im Detail beschrieben. Hierbei zeigen die Zeichnungen im Einzelnen:
- Fig. 1: eine schematische Darstellung einer bevorzugten Ausführungsform eines gesicherten Netzwerks, z.B. eines VPN-Netzes nach dem Stand der Technik,
- Fig. 2: eine schematische Darstellung einer bevorzugten Ausführungsform des erfindungsgemäßen Systems, und

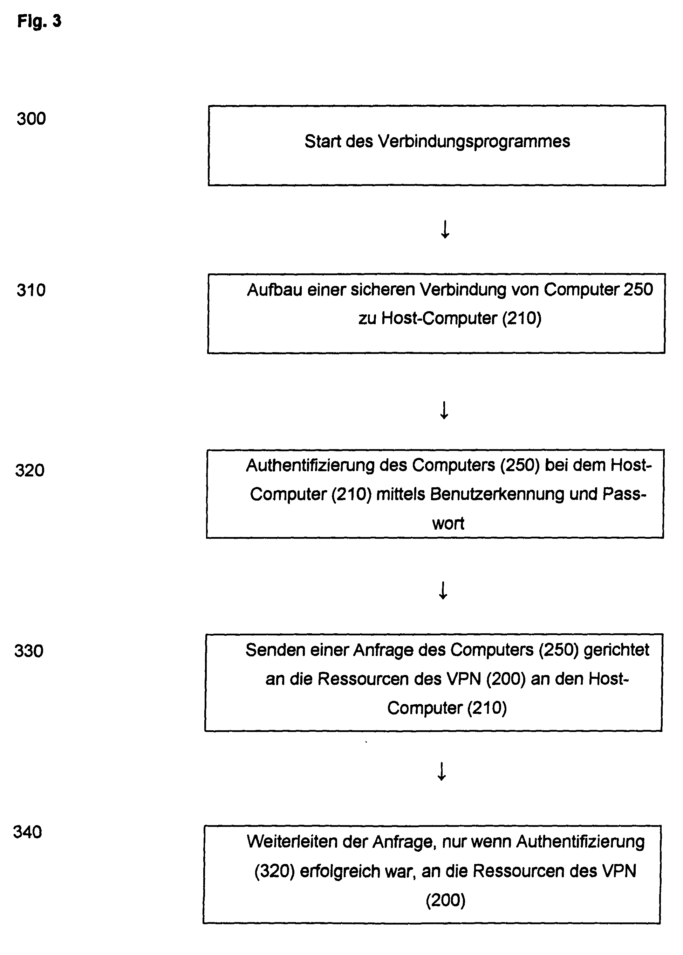

- Fig. 3: ein Flussdiagramm einer bevorzugten Ausführungsform der vorliegenden Erfindung.

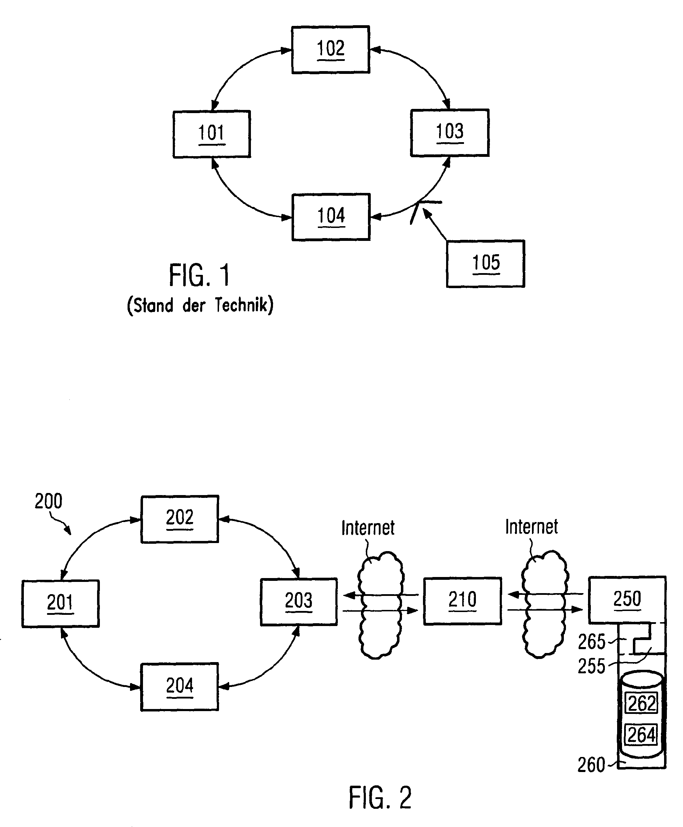

Fig. 1 zeigt ein, nach dem bekannten Stand der Technik, gesichertes Netzwerk, z.B. ein virtuelles privates Netzwerk (virtual private network, VPN), bestehend aus den Rechnern 101 bis 104. Die Rechner 101 bis 104 sind in diesem gesicherten Netz bzw. in diesem VPN eingebunden, z.B. dadurch, dass auf jedem dieser Rechner ein Zertifikat installiert ist. Dadurch können die Rechner 101 bis 104 zum Transport geschützter bzw. privater Daten und zum Zugriff auf Ressourcen innerhalb des geschützten Netzwerks bzw. innerhalb des virtuellen privaten Netzwerks ein öffentliches Netz, z.B. das Intemet nutzen. Die im VPN eingebundenen Rechner 101 bis 104 können hierbei die übertragenen Daten verschlüsselt oder unverschlüsselt übertragen. Die Authentifizierung der VPN-Endpunkte kann insbesondere auch durch die Verwendung von Passwörtem und/oder Zertifikaten gewährleistet werden. So muss sich ein Rechner 105 z.B. mittels eines Zertifikates identifizieren, um auf Ressourcen im gesicherten Netzwerk, d.h. Informationen und Dienste innerhalb des VPN-Netzwerks zugreifen zu können. Demzufolge ist es gemäß dem Stand der Technik notwendig, jeden Rechner, der auf Ressourcen innerhalb des gesicherte Netzes, d.h. z.B. des VPNs zugreifen soll, in das gesicherte Netz bzw. das VPN einzubinden, z.B. dadurch, dass auf diesem Rechner 105 ein Zertifikat installiert wird.

Fig. 2 zeigt eine schematische Darstellung einer bevorzugten Ausführungsform des erfindungsgemäßen Systems für die Kommunikation eines in einem gesicherten Netzwerk nicht eingebundenen Client-Computers 250 mit Ressourcen 201 bis 204 innerhalb des gesicherten Netzwerks 200. Ein gesichertes Netzwerk, beispielsweise ein eingerichtetes VPN 200 einer Firma beinhaltet die im gesicherten Netzwerk eingebundenen Rechner 201 bis 204. Die Rechner 201 bis 204 können bevorzugterweise z.B. ein Web-Interface-Server 201, Mailserver 202, eine Datenbank 203 und/oder ein VPN-Gateway 204 darstellen. Ein VPN-Gateway 204 ist bevorzugterweise dazu konfiguriert, eine gesicherte Verbindung mit einem Host-Computer 210 aufrechtzuerhalten. Der Client-Computer 250, der Zugriff auf Ressourcen innerhalb des gesicherten Netzwerks, z.B. Zugriff auf Daten und Information innerhalb des VPN 200 erlangen möchte, müsste nach dem Stand der Technik über ein installiertes Zertifikat verfügen, um in das VPN eingebunden zu werden. In der vorliegenden Erfindung jedoch weist der Client-Computer 250 bevorzugterweise ein solches installiertes Zertifikat nicht auf. Vielmehr wird der Client-Computer 250 mit einem bevorzugterweise transportablen computerlesbaren Speichermedium 260 über einen Signaleingang 255 verbunden. Bevorzugterweise weist dabei das computerlesbare Speichermedium 260 Einrichtungen 265 auf, die dazu geeignet sind, mit dem Signaleingang 255 des Client-Computers 250 so verbunden zu werden, dass, nachdem das Speichermedium 260 mit dem Client-Computer 250 verbunden wurde, der Client-Computer 250 das Speichermedium 260 als einen Datenspeicher, bevorzugterweise ein Wechsellaufwerk, erkennt. Das computerlesbare Speichermedium 260 weist darüber hinaus Authentifizierungsdaten 262 und ein Verbindungsprogramm 264 auf. Bevorzugterweise dadurch, dass der Client-Computer 250, nachdem dieser mit dem Speichermedium 260 verbunden wurde, das Speichermedium 260 als Datenspeicher erkennt, kann das Verbindungsprogramm vom Client-Computer 250 entweder automatisch oder auch durch Auswahl des Nutzers gestartet werden. Nach dem Starten des Verbindungsprogramms 264 baut der Client-Computer 250 automatisch eine sichere Verbindung zu dem Host-Computer 210 auf. Diese gesicherte Verbindung kann zum Einen eine Secure Sockets Layer (SSL) bzw. Transport Layer Security (TLS) Verbindung sein, oder auch andere Sicherheitsarchitekturen (z.B. IPSEC oder L2TP) verwenden. Nachdem die gesicherte Verbindung zwischen dem Host-Computer 210 und dem Client-Computer 250 hergestellt ist, sendet der Client-Computer (250) eine Anfrage an die Ressourcen innerhalb des gesicherten Netzwerks (200). Diese Anfrage wird von dem Host-Computer (210) entgegengenommen. Der Host-Computer (210) leitet diese Anfrage weiter an das gesicherte Netzwerk (200). Über eine weitere Authentifizierung des Benutzers, beispielsweise mittels Usemame und Passwort, kann gewährleistet werden, dass der Benutzer nur auf Ressourcen zugreifen kann, die für diesen Benutzer freigegeben sind. Alternativ kann diese zusätzliche Sicherheitsabfrage wegfallen. Die Antwort auf die zuvor gesendete Anfrage wird dann vom gesicherten Netzwerk (200) zum Host-Computer (210) gesendet, dieser sendet die Antwort weiter an den Client-Computer (250).

Eine solche Vorrichtung hat den Vorteil, dass der Client-Rechner (250) nicht in das bestehende gesicherte Netzwerk (200) aufgenommen werden muss. Vielmehr endet die gesicherte Verbindung zwischen dem Client-Rechner (250) und dem Host-Computer (210) bei dem Host-Computer (210). Der Host-Computer (210) ist seinerseits verbunden mit dem gesicherten Netzwerk (200) über eine gesicherte Verbindung. Der Host-Computer (210) fungiert somit als Gateway zwischen dem Client-Computer (250) und dem gesicherten Netzwerk (200).

Durch die einfache Entnehmbarkeit des computerlesbaren Mediums (260) wird es ermöglicht, dass die Authentifizierungsdaten bei dem Benutzer verbleiben können, nachdem er die Arbeit an dem Client-Rechner (250) beendet hat und er diesen Rechner 250 verlässt. Durch einfaches Entnehmen des computerlesbaren Mediums (260) gibt es nun keine Möglichkeit mehr von dem Client-Rechner (250) auf das VPN zuzugreifen. Demnach ist es dem Besitzer des tragbaren, computerlesbaren Mediums (260) möglich, von jedem Client-Computer 250 aus, Kontakt zum VPN aufzunehmen. Gleichzeitig stellt der Client-Computer 250 nur eine "temporäre" Verbindung zu dem gesicherten Netzwerk bzw. dem VPN her, die nach Entnahme des computerlesbaren Speichermediums 260 automatisch beendet wird, so dass diese Verbindung anschließend insbesondere durch einen anderen Nutzer nicht mehr rekonstruiert werden kann. Somit wird verhindert, dass nachdem ein Nutzer durch das Verbindungsprogramm 264 und die Authentifizierungsdaten 262 eine Verbindung zu Ressourcen innerhalb des gesicherten Netzwerks 200 hergestellt hat, diese Verbindung für weitere Nutzer in irgendeiner Form transparent wird, so dass die Sicherheit der Verbindung und insbesondere des gesicherten Netzwerks 200 gewährleistet bleibt.

Die unbefugte Benutzung des computerlesbaren Mediums (260) kann durch die Verwendung eines Passwortes für die Verwendung des auf dem Medium (260) abgelegten Authentifizierungsdaten verhindert werden. Alternativ ist jedoch denkbar, dass die Authentifizierungsdaten nicht mit einem Passwort versehen werden, um die Benutzung des computerlesbaren Mediums (260) bequemer zu gestalten.

Das computerlesbare Medium (260), das das Verbindungsprogramm sowie die Authentifizierungsdaten enthält, enthält Instruktionen, die von dem Prozessor des Client-Rechner (250) auszuführen sind und folgendes Verfahren beinhalten:

Nach dem Start des Verbindungsprogramms (300) erfolgt der Aufbau einer sicheren Verbindung (310) von Computer (250) zu dem Host-Computer (210). Danach erfolgt das Senden (330) einer Anfrage des Computers (250), gerichtet an die Ressourcen des gesicherten Netzwerks (200) an den Host-Computer (210). Danach wird die Anfrage weitergeleitet (340) an das gesicherte Netzwerk (200). Optional erfolgt in Schritt 320 die Authentifizierung des Computers (250) bei dem Host-Computer (210) mittels Benutzerkennung und Passwort.

## Patentansprüche

1. System zum Bereitstellen einer Kommunikation für einen in einem gesicherten Netzwerk (200) nicht eingebundenen Client-Computer (250) mit Ressourcen (201 bis 204) innerhalb des gesicherten Netzwerks, mit:
einem Client-Computer (250) mit mindestens einem Signaleingang (255),
einem transportablen, computerlesbaren Speichermedium (260), beinhaltend Authentifizierungsdaten (262), ein Verbindungsprogramm (264), und Einrichtungen (265), die dafür konfiguriert sind, das computerlesbare Speichermedium mit dem Client-Computer über den Signaleingang zu verbinden und
einem Host-Computer (210), der mit dem gesicherten Netzwerk über eine gesicherte Verbindung verbunden ist,
**dadurch gekennzeichnet, dass** der Client-Computer, wenn das computerlesbare Speichermedium mit dem Client-Computer über den Signaleingang verbunden ist, das Speichermedium als Datenspeicher erkennt, wodurch das Verbindungsprogramm auf dem Client-Computer ausführbar wird und das Verbindungsprogramm so konfiguriert ist, dass es bei Ausführung sicherstellt, dass der Client-Computer unter Verwendung der Authentifizierungsdaten eine sichere Verbindung zu dem Host-Computer herstellt, so dass der Host-Computer eine oder mehrere Anfragen des Client-Computers, die an Ressourcen innerhalb des gesicherten Netzwerks gerichtet sind, an das gesicherte Netzwerk weiterleitet.

2. System nach Anspruch 1, **dadurch gekennzeichnet, dass** das gesicherte Netzwerk (200) einen Web Interface Server (201) beinhaltet.

3. System nach einem der Ansprüche 1 und 2, **dadurch gekennzeichnet, dass** das gesicherte Netzwerk (200) einen Mailserver (202) und eine Datenbank (203) beinhaltet.

4. System nach einem der Ansprüche 1 bis 3, **dadurch gekennzeichnet, dass** die sichere Verbindung zwischen Client-Computer (250) und Host-Computer (210) eine SSL-Verbindung ist.

5. System nach einem der Ansprüche 1 bis 4, **dadurch gekennzeichnet, dass** die Antwort auf die eine oder mehreren Anfragen vom gesicherten Netzwerk (200) zum Host-Computer (210) gesendet wird und vom Host-Computer (210) zum Client-Computer (250) weitergeleitet wird.

6. System nach einem der Ansprüche 1 bis 5, **dadurch gekennzeichnet, dass** der Host-Computer (210) die übertragenen Daten nach Viren untersucht.

7. System nach einem der Ansprüche 1 bis 6, **dadurch gekennzeichnet, dass** die Authentifizierung des Client-Computers (250) mittels Benutzerkennung und Passwort durch manuelle Eingabe von Benutzerkennung und Passwort erfolgt oder automatisch durch auf dem Speichermedium (260) abgespeicherten Informationen beinhaltend Benutzerkennung und Passwort.

8. Computerlesbares Speichermedium (260), das als Datenspeicher von einem Computer (250) automatisch erkannt werden kann, wenn es mit einem Signaleingang (255) des Computers (250) verbunden wird, wobei das Speichermedium sowohl Authentifizierungsdaten (262) als auch ein Verbindungsprogramm (264) aufweist, welches, wenn es auf einem Computer (250) ausgeführt wird, in Verbindung mit den Authentifizierungsdaten die Ausführung folgender Schritte veranlasst:
Aufbau (310) einer sicheren Verbindung unter Verwendung der Authentifizierungsdaten zu einem Host-Computer (210), der mit einem gesicherten Netzwerk (200) über eine gesicherte Verbindung verbunden ist,
Senden einer Anfrage von Computer (250) an den Host-Computer (210),
Weiterleitung der Anfrage des Computers (250) durch den Host-Computer (210) an das gesicherte Netzwerk (200).

9. Computerlesbares Medium (260) nach Anspruch 8, **dadurch gekennzeichnet, dass** der Start (200) des Verbindungsprogramms automatisch oder durch eine Benutzereingabe erfolgt.

10. Computerlesbares Medium (260) nach einem der Ansprüche 8 oder 9, **dadurch gekennzeichnet, dass** das computerlesbare Medium (260) über Einrichtungen (265), die mit einem Signaleingang (255) eines Computers (250) verbunden sind, Daten mit dem Computer austauscht und den notwendigen Betriebsstrom erhält.

11. Computerlesbares Medium (260) nach einem der Ansprüche 7 bis 10, **dadurch gekennzeichnet, dass** der Proxy (210) die übertragenen Daten nach Viren untersucht.

12. Computerlesbares Medium (260) nach einem der Ansprüche 7 bis 11, **dadurch gekennzeichnet, dass** die Authentifizierung (320) des Computers (250) bei Proxy (210) mittels Benutzerkennung und Passwort erfolgt.

13. Computerlesbares Medium (260) nach einem der Ansprüche 7 bis 12, **dadurch gekennzeichnet, dass** die Authentifizierung des Client-Computers (250) mittels Benutzerkennung und Passwort durch manuelle Eingabe von Benutzerkennung und Passwort erfolgt oder automatisch durch die auf dem Speichermedium (260) abgespeicherten Informationen beinhaltend Benutzerkennung und Passwort.

14. Computerlesbares Medium (260) nach einem der Ansprüche 7 bis 13, **dadurch gekennzeichnet, dass** die Antwort auf die Anfrage vom gesicherten Netzwerk (200) zum Host-Computer (210) gesendet wird und vom Host-Computer (210) zum Computer (250) weitergeleitet wird.
